# EUROPÄISCHE PATENTSCHRIFT

(11) **EP 0 387 737 B1**
(45) Veröffentlichungstag und Bekanntmachung des Hinweises auf die Patenterteilung: **11.08.1993**
(21) Anmeldenummer: 90104598.9
(22) Anmeldetag: 10.03.1990
(51) Int. Cl.: B29C 49/64, B29C 49/38

(54) **Verfahren zur Erhitzung von einem Vorrat entnommenen gespritzten Vorformlingen für das anschliessende Aufblasen zu Hohlkörpern in einer Blasform und Vorrichtung zum Blasformen vorgefertigter Vorformlinge**
Method for heating injection-moulded preforms taken from a magazine for blowing them up to hollow parts in a blow mould and device for blow moulding prefabricated preforms
Procédé pour réchauffer des préformes injectées prélevées d'une réserve, pour les souffler enfin dans un moule de soufflage et en faire des corps creux et procédé pour le moulage par soufflage de préformes préfabriquées

(30) Priorität: 14.03.1989 DE 3908219; 15.03.1989 DE 3908345; 30.03.1989 DE 3910293
(43) Veröffentlichungstag der Anmeldung: 19.09.1990
(73) Patentinhaber: BEKUM Maschinenfabriken GmbH, D-12107 Berlin (DE)
(72) Erfinder: Roos, Uwe-Volker, D-3123 Bodenteich (DE); Gittner, Franz, D-3111 Soltendieck (DE)
(74) Vertreter: Huss, Carl-Hans, Dipl.-Ing.

(56) Entgegenhaltungen:
- US-A- 3 787 170
- US-A- 3 930 788
- US-A- 3 973 897
- US-A- 4 036 927
- US-A- 4 315 725

## Beschreibung

Die Erfindung betrifft ein Verfahren zur Erhitzung von einem vorrat entnommenen gespritzten Vorformlingen aus Kunststoff gemäß dem Oberbegriff des Anspruchs 1 sowie Vorrichtungen gemäß den Oberbegriffen der Ansprüche 4 und 10.

Bei der Herstellung von Hohlkörpern aus Kunststoffen im Blasverfahren, d.h. durch Aufblasen eines in eine geteilte Blasform aufgenommenen Vorformlings, wird normalerweise "in einer Wärme" gearbeitet. Das bedeutet, daß der aus dem Blaskopf eines Extruders kontinuierlich oder intermittierend ausgepreßte Schlauch abschnittsweise als im noch warmplastischen Zustand verformbarer Vorformling in die Blasform überführt und in dieser zum fertigen Hohlkörper aufgeblasen wird. Ähnlich wie bei der vorbeschriebenen Extrusionsblasmethode wird bei der Spritz-Blasmethode ein gespritzter Vorformling in dem vom Spritzen her noch warmen Zustand in die Blasform überführt und dort zum Hohlkörper aufgeblasen. In manchen Fällen wird zwischen der Vorformlingsbildungsstation und der Blasstation eine Konditionierungsstation geschaltet, die zu heiße Vorformlinge auf die richtige Blastemperatur abkühlt oder zu weit abgekühlte Vorformlinge wieder erwärmt. Die zuletzt genannte Methode wird insbesondere beim sogenannten "Streckblasen" eingesetzt, bei dem Vorformlinge innerhalb der Blasform vor dem Aufblasen in Längsrichtung gestreckt werden, wodurch auch eine Streckung der Kunststoffmoleküle eintritt, wodurch sich am fertig geblasenen Gegenstand gegenüber nicht gestreckten Hohlkörpern eine bessere mechanische und häufig auch optische Eigenschaft einstellt, wie z. B. höhere Festigkeit und bessere Transparenz.

Neuerdings wird aber wieder häufiger auch auf das an sich ältere Verfahren zurückgegriffen, Vorformlinge auf Vorrat herzustellen und diese dann im natürlich kalten Zustand wieder zu erwärmen und der Blasform zuzuführen, ein Verfahren, das heutzutage allgemein als "Reheat-Verfahren" bezeichnet wird.

Dieses Reheat-Verfahren hat den Vorteil, daß ein höherer Ausstoß als bisher zu erzielen ist, weil nunmehr die Taktzeit der Maschine nicht mehr von der Austrittsgeschwindigkeit des im Extruder plastizifierten Materials aus der Düse des Blaskopfs abhängig ist, sondern weil z.B. mehrere Vorformlinge erzeugende Spritzmaschinen auf eine Blasmaschine arbeiten können. Ein weiterer Vorteil liegt darin, daß bei der Herstellung von Höhlkörpern mit einer Füll- und Entleerungsöffnung, z.B. Flaschen, Dosen, Kanistern oder dergleichen, der für den Verschluß präzise auszubildende Bereich, z.B. in Form eines Gewindes, bereits genauestens am Vorformlingsende in der Spritzmaschine hergestellt werden kann und dann beim Blasen in der Blasform nicht mehr angeformt zu werden braucht. Dadurch kann auch die Blaszeit verkürzt werden, weil dieser Halsbereich der Bereich mit dem dicksten Querschnitt am fertigen Hohlkörper ist, der, wenn in der Blasform angeformt, die meiste Zeit für die Abkühlung braucht, die erforderlich ist, um den Hohlkörper ohne Beschädigung durch Verformung aus der Blasform entnehmen zu können.

Für das Reheat-Verfahren müssen also die einem Vorrat entnommenen kalten Vorformlinge auf die Blastemperatur wieder erwärmt werden, und dies geschieht in der Regel mittels Infraroterhitzung, die in der relativ kürzesten Zeit und relativ am gleichmäßigsten die Vorformlinge erwärmt. Dabei bedeutet "gleichmäßig" sowohl Erwärmung über die axiale Länge des Vorformlings als auch über dessen Querschnitt.

Die größte Schwierigkeit bereitet die Erwärmung über den Gesamtquerschnitt, weil der an einer Heizstrecke vorbeilaufende und sich dabei um seine Achse drehende Vorformling nur von außen erwärmt werden kann. Die Folge ist ein Temperaturgradient über den Querschnitt, der sich beim anschließenden Recken und Verblasen auf die Qualität des hergestellten Hohlkörpers nachteilig auswirken würde. Die Innenseite des Vorformlings mit ihrer dann geringeren Temperatur verhält sich beim Recken und Blasen anders als die äußere, stärker erwärmte, sozusagen "heiße" Seite, wodurch beim Verstrecken und Blasen die inneren Bereiche des Vorformlings der Verformung größeren Widerstand als die äußeren Bereiche entgegensetzen, wodurch Verspannungen im Hohlkörper entstehen, die die Festigkeit und das Aussehen beeinflussen. Um dem entgegenzuwirken, wird nach dem Stande der Technik die Außenseite der Vorformlinge durch Infrarotstrahlung so hoch erhitzt, daß auch auf der Innenseite eine Temperatur erreicht wird, bei der eine gute Verformung möglich ist. Bei manchen für die Herstellung hochwertiger Artikel eingesetzten Materialien, z.B. PET, soll aber die Außenseite des Vorformlings nicht zu hoch erhitzt werden, weil dieses Material bei höheren Temperaturen zu Rekristallisation neigt, was sich als Sprödigkeit im fertigen Hohlkörper auswirkt und zu Haarrissen oder dergleichen führt. Deshalb ist es auch z.B. durch die US-PS 4,079,104 bekannt, der Infraroterwärmung eine Luft- oder Gaskühlung derart zu überlagern, daß gleichzeitig mit der Erwärmung eine Kühlung der Außenseite erfolgt, also z.B. zwischen die parallel im Abstand angeordneten Infrarotstrahler Kühlluft auf die Oberfläche der Vorformlinge geblasen wird, oder die sich um ihre Vertikalachse drehenden, an den Infrarotstrahlern vorbeigeführten Vorformlinge auf der einen Seite durch diese erwärmt und auf der gegenüberliegenden Seite mit einem Luftstrom angeblasen werden.

Diese bekannte Methode ist aber nicht sicher, zumindest nicht optimal und erlaubt kein sehr feinfühliges Reagieren auf unterschiedliche Bedingungen, die nicht nur von der Länge und dem Durchmesser der Vorformlinge sowie deren Wandstärke, sondern auch von den Tagesbedingungen, z.B. davon abhängen, ob die Maschine in der Frühschicht oder in der meist warmen Nachmittagsschicht oder demgegenüber kälteren Nachtschicht arbeitet. Insbesondere aber wird mit zunehmendem Querschnitt der Vorformlinge das bekannte Verfahren riskanter. Schon für Querschnitte ab etwa 3 mm, die in der Praxis häufig vorkommen, müßte für eine genügende Erwärmung des Innenwandbereichs die Außenseite so stark erhitzt werden, daß trotz der gleichzeitigen Kühlung zumindest örtliche Überhitzungen nicht ausgeschlossen werden können.

Demnach besteht eine Aufgabe der Erfindung darin, ein Verfahren für die Erwärmung von Vorformlingen bei der Reheat-Methode zu schaffen, das es gestattet, die Vorformlinge auf die richtige Blastemperatur ohne Gefahr der Überhitzung an der Außenseite zu bringen.

Diese Aufgabe wird bei einem Verfahren der eingangs genannten Art erfindungsgemäß dadurch gelöst, daß die Vorformlinge beim Durchlaufen der Bahn zunächst auf eine Temperatur unterhalb der Blastemperatur erwärmt, danach gekühlt und im Anschluß an die Kühlung wieder auf eine Temperatur erwärmt werden, die gering oberhalb der Blastemperatur liegt, wonach sie zum Ausgleich zwischen Außenwand- und Innenwandtemperatur auf die Blastemperatur, ehe sie in die Blasform überführt werden, sich auf der Bahn selbst überlassen bleiben oder gering gekühlt werden.

Wie bereits oben erwähnt, hat das Reheat-Verfahren unter anderem den Vorteil, daß die Taktzeit der gesamten Vorrichtung zum Blasformen der vorgefertigten Vorformlinge durch die Leistungsfähigkeit der Blasformstation vorgegeben ist und nicht durch einen vorgeschalteten Takt bei der Erzeugung der Vorformlinge, die nach dem Reheat-Verfahren in einem ausreichenden Vorrat zur Verfügung stehen, da sie in einem unabhängigen Vorgang vorgefertigt werden. Ein Nachteil dieses Reheat-Verfahrens liegt aber in den beträchtlichen Kosten der Wiedererwärmung der Vorformlinge, die mit einem großen Energieaufwand verbunden ist.

Mit einer Vorrichtung der betrachteten Art werden im allgemeinen verschiedenartige Gegenstände erzeugt, die aus unterschiedlichen Vorformlingen geblasen werden, wobei bei Änderung des Produktionsprogramms die Maschine, insbesondere die Blasformstation, entsprechend umzurüsten ist. Die Durchmesser der verwendeten Vorformlinge können hierbei erheblich variieren. Bei den bisher bekannten Blasmaschinen der betrachteten Art wird diesem Umstand dadurch Rechnung getragen, daß die Halterungen für die Vorformlinge auf der Transporteinrichtung einen solchen Abstand voneinander haben, daß auch die größten auf der Maschine zu bearbeitenden Vorformlinge, d.h. die Vorformlinge mit maximalen Querschnittsabmessungen, auf den Halterungen befestigt werden können, ohne sich hierbei gegenseitig den erforderlichen Raum zu nehmen. Dies hat zur Folge, daß bei der Verarbeitung von Vorformlingen kleinerer Querschnittsabmessungen zwischen diesen erhebliche Freiräume verbleiben, wodurch der Wirkungsgrad der Infrarotstrahler beträchtlich herabgesetzt ist.

Es kommt hinzu, daß die zwischen den Vorformlingen hindurchgehende Wärmestrahlung nicht nur verlorengeht, was die angestrebte Heizwirkung anbetrifft, sondern diese Wärmestrahlen treffen auf üblicherweise den Infrarotstrahlern gegenüberliegend angeordnete Reflektoren, die zum Schutz der dahinter befindlichen Maschinenteile angeordnet sind, um deren unerwünschte Erwärmung weitgehend zu vermeiden. Die von den Reflektoren zurückgeworfene Wärmestrahlung ist nicht zur gezielten Erwärmung der Vorformlinge geeignet, da ihre Heizwirkung nicht genau erfaßtbar ist, so daß die reflektierte Wärmestrahlung insgesamt nachteilige Wirkung entfaltet.

Der vorliegenden Erfindung liegt somit die weitere Aufgabe zugrunde, bei einer Vorrichtung zum Blasformen vorgefertigter Vorformlinge den Wirkungsgrad der Heizstation zu erhöhen und ihre Wirkungsweise zu verbessern.

Bei der erfindungsgemäßen Vorrichtung ist der Abstand der Halterungen für die Vorformlinge in Transportrichtung veränderbar, um den unterschiedlichen Durchmessern der zu erwärmenden Vorformlinge Rechnung tragen zu können und deren Zwischenräume beim Transport durch die Heizstation zu minimieren. Durch die Verkleinerung der Zwischenräume zwischen den Vorformlingen wird nicht nur der Wirkungsgrad der von den Infrarotstrahlern abgegebenen Wärmestrahlung erhöht, sondern es wird entsprechend die Entstehung von diffuser reflektierter Wärmestrahlung verringert, die in unerwünschter Weise Maschinenteile aufheizt und die gezielte Erwärmung der Vorformlinge erschwert.

Die Transporteinrichtung hat wenigstens eine Transportkette, die die Vorformlinge intermittierend entlang einer geradlinigen Bahn an den Heizstrahlern vorbei bewegt. Der Takt des Vorschubs der Vorformlinge ist dabei den jeweiligen Verhältnissen entsprechend einstellbar.

Wenn Vorformlinge kleiner Querschnittsabmessungen zu bearbeiten sind, kann die Anordnung so getroffen sein, daß jeweils auf zwei benachbarten Kettengliedern der Transportkette eine Halterung befestigt ist, die bei Umrüstung der Transportvorrichtung zur Bearbeitung größerer Vorformlinge leicht abbaubar sein sollte. Die Halterungen können hierbei in Bewegungsrichtung im wesentlichen aneinander angrenzen, wobei nur soviel Spiel zwischen ihnen verbleibt, daß die Bewegbarkeit der Transportkette nicht beeinträchtigt ist. Wenn somit an jedem Kettenglied, d.h. an jeder Hülse bzw. jedem Bolzen der Transportkette ein zugehöriger Abschnitt einer Halterung angebracht ist, können die Abmessungen so getroffen sein, daß die Mittelpunkte der Halterungen einen Abstand von 44 mm voneinander haben. Ein solcher "44-Stich" ist für die Gruppe der kleinsten Vorformlinge geeignet, die einen Durchmesser bis etwa 42 mm haben.

Wenn größere Vorformlinge bearbeitet werden sollen, kann die Transportkette auf einfache Weise derart umgerüstet werden, daß unter Verwendung derselben Halterungen jeweils ein Kettenglied zwischen benachbarten Halterungen freibleibt, so daß die Mittelpunkte der Halterungen nun einen Abstand von 66 mm haben können.

Zur Verarbeitung von Vorformlingen, die noch größere Querschnittsabmessungen haben, kann die Anordnung so getroffen werden, daß zwischen den benachbarten Halterungen jeweils zwei Kettenglieder freibleiben, so daß die Mittelpunkte der Halterungen nun einen Abstand von 88 mm haben. Die Umrüstung der Transportkette ist dabei mit einem verhältnismäßig kleinen Arbeitsaufwand verbunden, was insbesondere für einen Wechsel zwischen einem "44-Stich" und einem "88-Stich" zutrifft. Eine Transportkette mit einem "44-Stich" kann auch in der Weise für einen "88-Stich" verwendet werden, das nur an jeder zweiten Halterung ein Vorformling befestigt wird.

Da mit dem Durchmesser der Vorformlinge im allgemeinen auch die Querschnittsabmessungen des Heizbereichs variieren, der auf einen Aufnahmedorn der Halterung aufgesteckt wird, wird vorgeschlagen, diesen Aufnahmedorn leicht austauschbar an einem Hubzapfen zu befestigen, der die Halterungen durchgreift. Zur leichten Auswechselbarkeit wird vorgeschlagen, den Aufnahmedorn mittels eines Schnappverschlusses an dem Hubzapfen zu befestigen.

Ferner ist eine Reflektorhülse an der Halterung befestigt, wozu diese mit einer ringförmigen Aussparung versehen ist, in der die Reflektorhülse ebenfalls leicht austauschbar, vorzugsweise mittels eines Schnappverschlusses, zu befestigen ist. Die Reflektorhülse umschließt beim Transport des Vorformlings durch die Heizstation dessen aufgesteckten Halsbereich mit einem so geringen Abstand, daß der Halsbereich vor einer unerwünschten Erwärmung geschützt ist, wie weiter unten noch näher ausgeführt wird.

Durch die leicht austauschbare Befestigung des Aufnahmedorns und der Reflektorhülse können auch diese Bauteil in kürzester Zeit an andere Vorformlingsabmessungen angepaßt werden, so daß die Maschine mit einem äußerst geringen Zeitaufwand umzurüsten ist.

Nach einem weiteren Vorschlag der Erfindung nimmt eine Zangeneinrichtung an einer der Heizstation nachgeordneten Abnahmestation die Vorformlinge von den Aufnahmedornen ab, indem letztere mittels einer Hubeinrichtung zunächst derart angehoben werden, daß sich der Halsbereich oberhalb der Reflektorhülse befindet, woraufhin die Zangeneinrichtung den Halsbereich ergreift und hält, während der Aufnahmedorn zurückgezogen wird. Die Zangeneinrichtung bewegt anschließend die Vorformlinge im wesentlichen im rechten Winkel zur Laufrichtung der Laufkette und in einer entsprechend höher liegenden Ebene die Vorformlinge zu wenigstens einer Blasformstation.

Die erfindungsgemäße Vorrichtung kann mit zwei nebeneinander angeordneten Transportketten und mit zwei Blasformstationen ausgerüstet sein, die zu beiden Seiten der Abnahmestation angeordnet sind und abwechselnd von der Zangeneinrichtung mit Vorformlingen versorgt werden können. Hierzu sind der Takt der Transportketten, der Hubeinrichtung, der Zangeneinrichtung und der beiden Blasformstationen sowie die Leistung der Heizstation entsprechend aufeinander abzustimmen, wobei die Vorrichtung mit ihren beiden Blasstationen einen sehr hohen Ausstoß haben kann.

Wie bereits oben erwähnt, hat das Reheat-Verfahren den Vorteil, daß zur Herstellung von Hohlkörpern mit einer Füll- und Entleerungsöffnung wie z.B. Flaschen der Halsbereich, der beispielsweise ein Gewinde haben kan, bereits präzise am Vorformlingsende in der Spritzmaschine hergestellt wird und somit in der Blasform nicht mehr verändert werden muß. Damit der Halsbereich nicht direkt den Infrarotstrahlen der Heizstation ausgesetzt ist, ist es aus der US-PS 4,076,071 bekannt, die Vorformlinge beim Transport durch die Heizstation so auf den Aufnahmedornen zu halten, daß die Halsbereiche der Vorformlinge sich unterhalb der Ebene der Heizstrahler befinden. Zwar wird auf diese Weise verhindert, daß der Halsbereich ebenso hoch erwärmt wird wie der darüber befindliche Hauptteil des Vorformlings, der nachfolgend zu dem gewünschten Hohlkörper aufzublasen ist, jedoch wird hierbei auch der Halsbereich im beträchtlichen Maße erwärmt, da die von den Infrarotstrahlern abgegebene Wärme auch in tiefer liegende Bereiche verbreitet wird. Diese Erwärmung des Halsbereichs ist im hohen Maße unerwünscht, da diese bei der weiteren Handhabung des Vorformlings, beispielsweise beim Abnehmen von dem Dorn, zu Verformungen führen kann, was unter Umständen die Unbrauchbarkeit des hergestellten Gegenstandes zur Folge hat.

Eine weitere Aufgabe der vorliegenden Erfindung besteht demnach darin, die Vorrichtung der betrachteten Art so weiter zu entwickeln, daß der Halsbereich der Vorformlinge optimal gegen einwirkende Wärme geschützt ist.

Hierzu ist gemäß der Erfindung vorgesehen, daß der auf denAufnahmedorn aufgesteckte Vorformling während des Durchlaufs durch die Heizstation vollständig von einer Schutzhülse umgeben ist, die den Halsbereich sowohl gegen direkte Wärmestrahlung von den Infrarotstrahlern als auch vor reflektierten Wärmestrahlen schützt, die im gesamten Durchlaufbereich durch die Heizstation auftreten. Wenn der Innendurchmesser der Schutzhülse dabei den maximalen Außendurchmesser des Halsbereichs des Vorformlings nur geringfügig übersteigt, ist zuverlässig vermieden, daß der Halsbereich in einem schädlichen Umfang erwärmt werden kann. Eine gewisse Erwärmung findet dabei durch den Wärmefluß innerhalb des Vorformlings statt, die jedoch nicht zu solchen Temperaturen führen kann, die die Festigkeit des Halsbereichs so weit herabsetzt, daß nachteilige Folgen zu gewärtigen sind.

Damit die Schutzhülse, die anstelle des Halsbereichs des Vorformlings der direkten Wärmebestrahlung ausgesetzt ist, dabei nicht so weit erwärmt wird, daß sie ihrerseits Wärme auf den Halsbereich überträgt, besteht die Schutzhülse zweckmäßigerweise aus einem Stahl, dessen Außenfläche besonders glattpoliert,d.h. gespiegelt ist, so daß die Wärmestrahlung fast vollständig reflektiert wird.

Nach Durchlauf durch die Heizstation ist der mit Ausnahme des Heizbereichs auf Blastemperatur erwärmte Vorformling von dem Aufnahmedorn abzunehmen und der Blasformstation zuzuführen. Dies muß -wie oben erwähnt- in der Weise geschehen, daß der Vorformling hierbei nicht verformt wird, und dieser Vorgang muß mit einer beträchtlichen Geschwindigkeit erfolgen, wenn die Kapazität der gesamten Vorrichtung nicht durch den Übertragungsvorgang herabgesetzt werden soll. Um diesen Anforderungen trotz der Anordnung der Schutzhülse um den Halsbereich des Vorformlings gerecht zu werden, wird erfindungsgemäß vorgeschlagen, daß der Aufnahmedorn gegenüber der Schutzhülse axial bewegbar gehalten ist, während die Schutzhülse fest an der Transporteinrichtung angebracht ist.

Der Aufnahmedorn kann mit einem Hubzapfen versehen sein, der ins Innere der geschlossenen Transportkette hineinragen kann, während im Bereich der Abnahmestation eine Hubeinrichtung angeordnet ist, die vorzugsweise mit einem gabelförmigen Kopfende den Hubzapfen um eine solche Strecke anhebt, daß sich der gesamte Halsbereich des aufgesteckten Vorformlings oberhalb der Oberkante der Schutzhülse befindet.

Zum Abnehmen des Vorformlings und zu dessen Überführung in die Blasformstation ist eine Zangeneinrichtung zwischen der Abnahmestation und der Blasformstation in einer Ebene bewegbar angeordnet, die auf der Höhe des Halsbereichs der Vorformlinge in deren angehobenen Zustand liegt. Bei dieser Ausgestaltung wird demnach der Vorformling von der Zange am im kalten Zustand verbliebenen Halsbereich ergriffen, nachdem die Hubeinrichtung den Vorformling angehoben hat, woraufhin der Hubzapfen mit dem damit verbundenen Aufnahmedorn in den Ausgangszustand zurückkehrt. Hierbei wird der Vorformling von dem Aufnahmedorn abgezogen, woraufhin der Vorformling in dieser Ebene in die Blasformstation überführt werden kann, ohne daß die Schutzhülse diesen Vorgang behindert.

Der vorstehend beschriebene Arbeitsablauf wird dadurch erleichtert, daß die Transporteinrichtung mit Hilfe eines Schrittschalters intermittierend vorschreitet, wobei der Arbeitstakt der Transporteinrichtung selbstverständlich auf den Takt der Hubeinrichtung, der Einrichtung zum Abnehmen und Überführen der Vorformlinge und der Blasformstation abgestimmt ist. Erfindungsgemäß ist vorgesehen, daß die Hubeinrichtung und die Einrichtung zum Abnehmen der Vorformlinge pneumatisch arbeiten, wogegen das Überführen mit wegrückgeführter Proportionaltechnik mit hydraulischem Antrieb geschieht, wodurch ein äußerst schneller und präziser Bewegungsablauf erzielbar ist.

Die Heizstation ist zweckmäßigerweise geradlinig angeordnet, wobei es sich als vorteilhaft erweist, die Vorformlinge seitlich, vorzugsweise im rechten Winkel zur Laufrichtung der Transporteinrichtung zu der Blasformstation zu überführen.

Weitere Einzelheiten der Erfindung ergeben sich aus der nachfolgenden Beschreibung sowie anhand der Zeichnung. Dabei zeigen:
- Fig. 1: die Erhitzung der Außen- und Innenwand eines Vorformlings im Temperatur-Zeit-Diagramm nach dem Stande der Technik;
- Fig. 2: die Erhitzung der Außen- und Innenwand eines Vorformlings im Temperatur- Zeit-Diagramm nach der Erfindung;
- Fig. 3: eine Aufsicht auf eine Erhitzungsstrecke einer Reheat-Blasmaschine für die Durchführung des Verfahrens nach der Erfindung, schematisch und stark verkleinert;
- Fig. 4: eine reinschematische Aufsicht auf eine Reheat-Blasvorrichtung mit zwei Transportketten und zwei Blasformstationen;
- Fig. 5A-5C: Aufsichten auf Teile einer Transportkette mit unterschiedlich beabstandeten Halterungen;
- Fig. 6: eine Querschnittsansicht einer Halterung gemäß den Figuren 5 mit zwei verschiedenen Aufnahmedornen und Reflektorhülsen und
- Fig. 7: eine Seitenansicht der Halterung der Vorformlinge an der (nicht dargestellten) Transporteinrichtung.

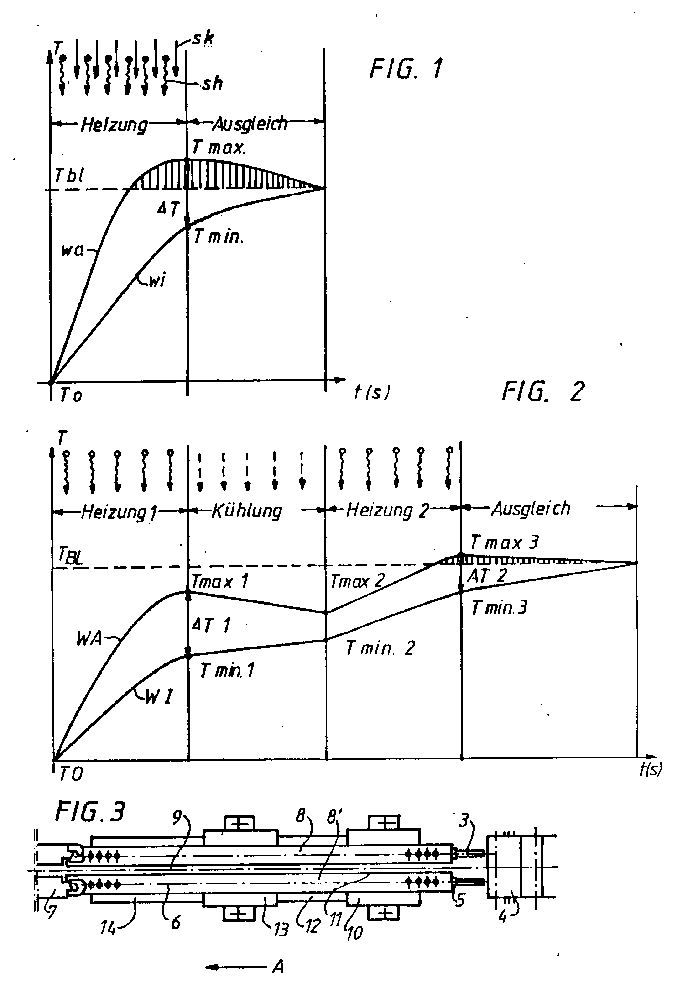

Die nach dem Stande der Technik übliche Erwärmung eines Vorformlings sei anhand der Kurve für die der direkten Infrarotbestrahlung ausgesetzte Außenwand wa und der nur durch Konvexion erwärmten Innenwand wi nach dem Schaubild der Fig. 1 erläutert. Demnach wird auf der Heizstrecke, neben der die Infrarotstrahler angebracht sind, die Außenwand wa von der Temperatur To, mit der der Vorformlinge dem Vorrat entnommen wurde, auf eine Temperatur Tmax erhitzt, die wesentlich über der für das Verblasen in der Temperatur erforderlichen Temperatur Tbl liegt. Wenn der Vorformling die Heizstrecke verläßt, hat aber die Innenwand wi erst eine Temperatur Tmin erreicht, die noch wesentlich unter der für das Verblasen erforderlichen Temperatur liegt. Es entsteht ein Temperaturgradient Δ T. In der der Heizstrecke folgenden sogenannten "Ausgleichsstrecke" kühlt dann die Temperatur wa des Vorformlings langsam ab, bis sie die Blastemperatur Tbl erreicht, während die im Materialquerschnitt des Vorformlings noch genügend gespeicherte Wärme die Innenwand wi weiter erwärmt, bis auch diese die Blastemperatur Tbl erreicht hat.

Wäre die Außenwand nicht bis Tmax erwärmt worden, würde die Kurve wi an ihrem Ende die Kurve wa nicht treffen, d.h. zwischen der Temperatur für die Außenwand und der für die Innenwand weiterhin ein Temperaturgradient vorhanden sein. Dabei wird nach dem Stande der Technik die Außenwand nicht nur durch Infrarotstrahlung sh erwärmt, sondern gleichzeitig wird, um ein noch höheres Ansteigen von Tmax zu verhindern, mit Luft oder Gasstrahlen sk gekühlt.

Bei dem Verfahren nach der Erfindung gemäß dem Schaubild der Fig. 2 wird die Außenwand WA des Vorformlings in einer Heizstrecke 1 auf eine Temperatur Tmax1 erwärmt, die noch unterhalb der für das Verblasen erforderlichen Temperatur Tbl liegt und entsprechend erreicht die Innenwand WI eine Temperatur Tmin1. Erfindungsgemäß schließt sich an die Heizstrecke eine Kühlstrecke an, in der die Temperatur der Außenwand WA auf eine Temperatur Tmax2 absinkt, während die Temperatur der Innenwand WI, wenn auch mit geringerer Steigung gegenüber der in der Heizstrecke, weiter auf eine Temperatur Tmin2 ansteigt. Von diesem gegenüber To höheren Niveau gelangt der Vorformling in eine zweite Heizstrecke 2, in der die Temperatur weiter steigt, jedoch auf eine Temperatur Tmax3, die nur gering über der Blastemperatur Tbl liegt, so daß keine Gefahr für ein "Verbrennen" der Außenhaut des Vorformlings besteht. Gleichzeitig steigt auch die Temperatur der Innenwand WI weiter an bis zur Temperatur Tmin3.

Nach Verlassen der Heizstrecke 2 kann nun der Vorformling in einer Ausgleichsstrecke außen langsam weiter bis auf die Blastemperatur TBL abkühlen und die Innenwandtemperatur sich bis auf diese weiter gering erhöhen.

Mit Hilfe des erfindungsgemäßen Verfahrens kann man sich an die für das jeweils verarbeitete Material günstigste Blastemperatur gewissermaßen "schonend" heranarbeiten und sehr feinfühlig die besonderen Gegebenheiten berücksichtigen. So wird man z.B. bei der Behandlung dickwandiger Vorformlinge eine von der Darstellung der Figur 2 insofern abweichende Kurve erhalten, als beim Verlassen der ersten Heizstrecke Tmax1 und Tmin1 niedriger liegen werden, und man wird dann in der Kühlstrecke eine geringere Kühlung vornehmen. Auf jeden Fall kann der über der TBL-Geraden liegende, durch die senkrechte Schraffur gekennzeichnete "Überhitzungsbauch" bei Anwendung des erfindungsgemäßen Verfahrens sehr flach gehalten werden.

Eine für die Durchführung des erfindungsgemäßen Verfahrens geeignete Vorrichtung ist schematisch in Fig. 3 veranschaulicht. Die auf Vorrat im Spritzverfahren hergestellten Vorformlinge 3 gelangen über eine sie sortierende und zurechtlegende Zuführung 4 auf nebeneinander in gleichen Abständen angeordnete Haltedorne 5, die auf Transportketten 6 montiert sind. Diese werden in Pfeilrichtung A in Richtung auf die die Vorformlinge nach der Erhitzung aufnehmenden Organe 7 bewegt, die sie einer in dieser Figur nicht dargestellten Blaseinheit zuführen. Während des Transports auf den Ketten 6 werden die sie stützenden Haltedorne 5 und damit auch die Vorformlinge 3 um ihre Achse mehrmals gedreht. Bei dem dargestellten Beispiel sind zwei Bahnen 8, 8' vorgesehen, d.h. es werden zwei Reihen von Vorformlingen gleichzeitig erhitzt. Hierfür sind die Bahnen 8, 8' voneinander durch eine Wand 9 getrennt.

An die Zuführung 4 der Vorformlinge 3 schließt sich eine erste Heizstrecke an, die aus einem Infrarotstrahlerblock oder -panel 10 sowie aus einer die Heizstrahlen zurückwerfenden Fläche 11 auf den Bereich der Trennwand 9 besteht, die dem Block 10 gegenüberliegt. Nach dem Verlassen der ersten Heizstrecke gelangen die Vorformlinge in eine Kühlstrecke mit einer Kühlluft oder ein Kühlgas gegen die Vorformlinge blasenden Kühleinrichtung 12, und danach werdendie Vorformlinge in einer zweiten Heizstrecke mit einem Strahlerblock 13 wieder erwärmt. Auf die zweite Heizstrecke folgt eine Ausgleichsstrecke 14, auf der normalerweise kein Einfluß auf die Vorformlinge mehr genommen wird, die aber auch eine zweite Kühleinrichtung für die Fälle aufweisen kann, daß in Ausnahmesituationen eine zumindest geringe Kühlung zweckmäßig sein sollte.

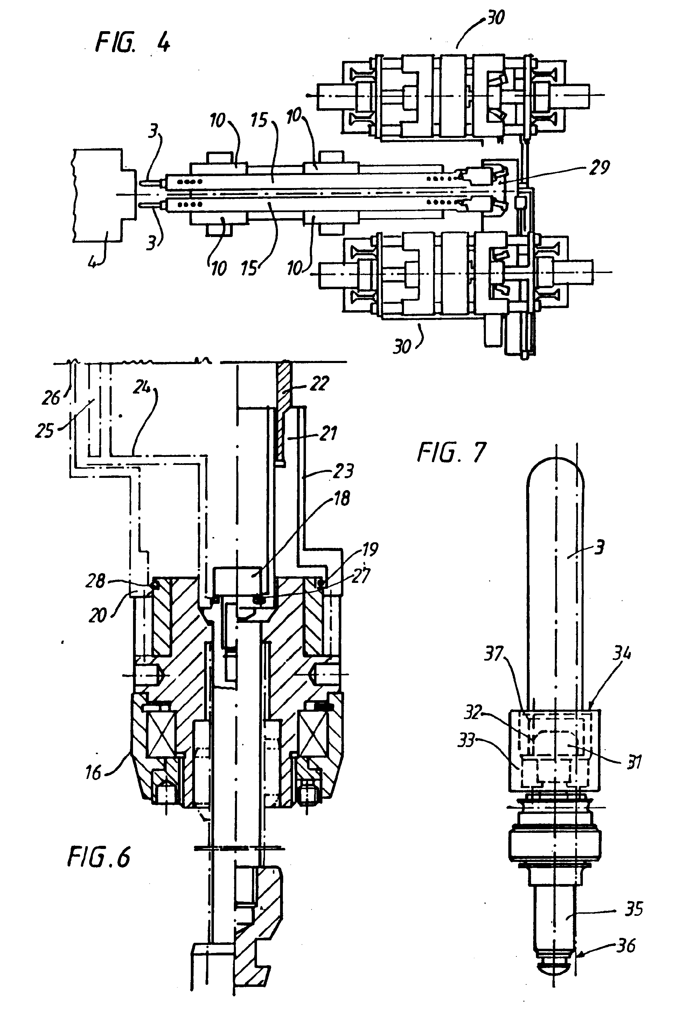

Es wird nun auf Fig. 4 Bezug genommen, die auf rein schematische Weise eine weitere erfindungsgemäße Vorrichtung zum Blasformen vorgefertigter Vorformlinge mit weiteren Einzelheiten zeigt. Eine weiter oben bereits beschriebene und in der Figur 4 lediglich angedeutete Zuführung 4 steckt jeweils zwei Vorformlinge 3 während des takweisen Stillstandes zweier Transportketten 15 auf in der Zeichnung nicht näher zu erkennende Haltedorne auf, die mit den Transportketten 15 verbunden sind. Die Vorformlinge 3 werden schrittweise an jeweils zwei Infrarotstrahlern 10 vorbeigeführt, wobei sie auf weiter oben bereits beschriebene Weise auf Blastemperatur erwärmt werden. Am Ende der Transportketten 15 werden die Vorformlinge von einer Zangeneinrichtung 29 ergriffen und abwechselnd den beiden Blasformstationen 30 zugeführt, wo die Vorformlinge 3 zu den fertigen Gegenständen aufgeblasen werden. Die Bewegungsrichtung der Zangeneinrichtung 29 verläuft dabei senkrecht zur Bewegung der Transportketten 15.

In den Figuren 5A bis 5C sind Abschnitte einer Transportkette 15 dargestellt, auf denen Halterungen 16 mit unterschiedlichen Abständen voneinander befestigt sind, damit der Zwischenraum zwischen darauf befestigten Vorformlingen unterschiedlicher Durchmesser möglichst gering ist.

In Fig. 5A ist jeweils eine Halterung 16 auf zwei benachbarten Kettengliedern 17 angebracht, so daß die Halterungen 16 in Laufrichtung der Kette gesehen nur so weit voneinander beabstandet sind, daß der Bewegungsablauf der Laufkette nicht beeinträchtigt wird. Der Abstand l₁ der Mittelpunkte der Halterungen 16 voneinander beträgt in diesem Falle 44 mm. Mit dieser Anordnung können Vorformlinge verarbeitet werden, deren Durchmesser etwa bis zu 42 mm beträgt.

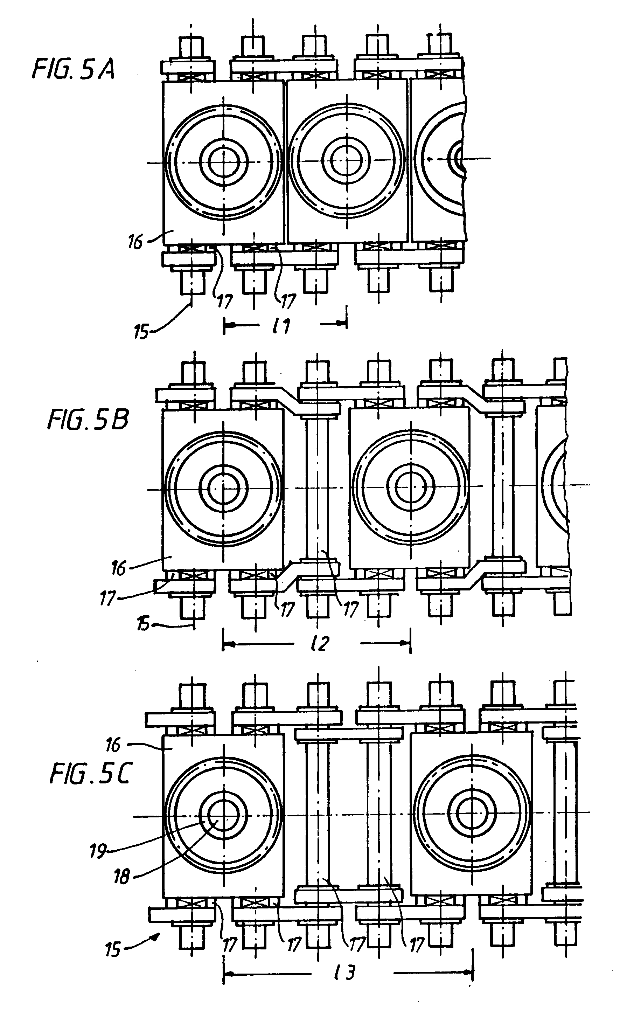

Die in Fig. 5B dargestellte Anordnung ist zur Verarbeitung von Vorformlingen mittlerer Größe vorgesehen, deren Durchmesser etwa zwischen 43 und 63 mm beträgt. Hier sind die Halterungen 16 in der Weise an der Laufkette 15 befestigt, daß zwischen den Halterungen 16 jeweils ein Kettenglied 17 freibleibt. Der Abstand l₂ zwischen den Mittelpunkten der benachbarten Halterungen beträgt hier 66 mm.

Bei der in Fig. 5C dargestellten Anordnung, bei der jeweils zwei Kettenglieder 17 zwischen benachbarten Halterungen 16 freibleiben, beträgt der sogenannte "Stich" 88 mm. Diese Anordnung ist zur Verabeitung von Vorformlingen mit einem Durchmesser im Bereich von 64 mm bis 84 mm bestimmt.

In allen drei vorstehend genannten Fällen kommen dieselben Halterungen 16 zur Anwendung, die leicht lösbar an den Kettengliedern 17 befestigt und damit schnell umzusetzen sind. In der schematischen Darstellung ist ein die Halterungen 16 mittig durchgreifender Hubzapfen 18, eine diesen umgebende Ringnut und eine äußere ringförmige Aussparung 20 zu erkennen, die nachfolgend mit Bezug auf Fig. 6 näher erläutert werden.

Fig. 6 zeigt eine Querschnittsansicht einer Halterung 16, an der in der rechten Hälfte der Darstellung ein Aufnahmedorn 21 für denHalsabschnitt 22 eines kleinen Vorformlings sowie eine zugehörige Reflektorhülse 23 kleinen Durchmessers befestigt ist, während der linke Teil der Abbildung einen nach außen abgestuften Aufnahmedorn 24 zum Aufstecken eines Halsbereichs 25 größeren Durchmessers und eine Reflektorhülse 26 mit entsprechendem Durchmesser zeigt. Die Aufnahmedorne 21 und 24 sind in der ringförmigen Nut mittels eines Schnappverschlusses 27 befestigt und somit ebenso leicht austauschbar wie die Reflektorhülsen 23 und 26, die in der äußeren ringförmigen Aussparung 20 sitzen und dort von einem ähnlichen Schnappverschluß 28 gehalten sind.

Fig. 6 läßt erkennen, daß der Hubzapfen 18 mit dem daran befestigten Aufnahmedorn 21 bzw. 24 und dem aufgesteckten Vorformling soweit anhebbar ist, daß der Vorformling die Reflektorhülse 23 bzw. 26 überragt, so daß der Vorformling seitlich entnommen werden kann, wie weiter unten noch näher beschrieben wird.

Fig. 7 zeigt weitere Einzelheiten einer Halterung für einen Vorformling, zu dessen Aufnahme die Halterung einen Aufnahmedorn 31 hat, auf den der Halsbereich 32 des Vorformlings 3 so aufgesteckt wird, daß dieser in einem Klemmsitz auf dem Dorn 31 sitzt. Der gesamte Halsbereich 32 ist, wie Fig. 7 deutlich zeigt, von einer Schutzhülse 33 umschlossen, die auf nicht dargestellte Weise fest an dem ebenfalls nicht dargestellten Kettenglied befestigt ist, so daß die Schutzhülse 33 gegenüber dem Kettenglied unbeweglich gehalten ist. Zwischen dem maximalen Außendurchmesser des Halsbereichs 32 und dem Innendurchmesser der Schutzhülse 33 verbleibt nur ein ganz schmaler Spalt 34, durch den praktisch keine Wärme,d.h. weder Wärmestrahlung noch im nennenswerten Umfang erwärmte Luft, in die Nähe des Halsbereichs 32 eintreten kann.

Der Aufnahmedorn 31 ist mit einem Zapfen 35 verbunden, wie bereits oben erwähnt, an dessen unterem Kopfabschnitt 36 an der Abnahmestation eine Hubeinrichtung vorzugsweise mit einem gabelförmigen Abschnitt angreift, um die Halteeinrichtung mit dem Aufnahmedorn 31 taktweise anzuheben und abzusenken. Der Vorformling 3 wird dabei um eine solche Strecke angehoben, daß die Unterkante des Halsbereichs 32 sich oberhalb der Oberkante 37 der Schutzhülse 33 befindet.

Wenn in diesem Zustand die Zange der Einrichtung 30 zum Abnehmen und Überführen der Vorformlinge sich um den Halsbereich 32 schließt und diesen festhält, wird beim nachfolgenden Absenken des Hubzapfens 35 durch die nicht dargestellte Hubeinrichtung der Aufnahmedorn 31 aus dem Halsbereich 32 des Vorformlings 3 herausgezogen. Unmittelbar nach diesem Vorgang wird der Vorformling 3 von der Einrichtung zum Abnehmen und Überführen der Vorformlinge der seitlich positionierten Blasformstation 30 zugeführt.

## Patentansprüche

1. Verfahren zur Erhitzung von einem Vorrat entnommenen, im Spritzverfahren hergestellten, kalten Vorformlingen (3) aus Kunststoff, die auf einer Bahn (8) eine Erhitzung und Kühlung erfahren und nach Durchlaufen der Bahn einer Blaseinrichtung zum Aufblasen der Vorformlinge zu Hohlkörpern zugeführt werden,
**dadurch gekennzeichnet,**
daß die Vorformlinge beim Durchlaufen der Bahn (8) zunächst auf eine Temperatur (Tmax1/Tmin1) unterhalb der Blastemperatur (TBL) erwärmt, danach gekühlt und im Anschluß an die Kühlung wieder auf eine Temperatur(Tmax3/Tmin3), die gering oberhalb der Blastemperatur liegt, erwärmt werden, wonach sie zum Ausgleich zwischen Außenwand- und Innenwandtemperatur auf die Blastemperatur, ehe sie in die Blasform überführt werden, sich auf der Bahn (8) selbst überlassen bleiben oder gering gekühlt werden.

2. Verfahren nach Anspruch 1,
dadurch gekennzeichnet, daß die Vorformlinge die erste Erwärmung, die darauf folgende Kühlung und die zweite Erwärmung in gleichen Zeiten durchlaufen.

3. Verfahren nach Anspruch 1 oder 2,
mit einer die gespritzten kalten Vorformlinge sortierenden und zurechtlegenden Zuführung (4) und einer oder mehreren parallel nebeneinander liegenden Bahnen (8) mit Transportketten (6), auf denen Haltedorne (5) die auf sie durch die Zuführung gesteckten Vorformlinge (3) mit Drehung um ihre Achse in Richtung auf eine Blaseinheit bewegen,
dadurch gekennzeichnet, daß auf der Bahn (8) im Anschluß an die Zuführung (4) hintereinander eine erste Erhitzungsstrecke, eine Kühlstrecke, eine zweite Erhitzungsstrecke und eine Ausgleichsstrecke angeordnet werden.

4. Vorrichtung zum Blasformen vorgefertigter Vorformlinge aus Kunststoff mit einer Transporteinrichtung, die die Vorformlinge durch eine Infrarotstrahler aufweisende Heizstation bewegt, wobei die Vorformlinge mit unten positioniertem Halsbereich auf jeweils einen Aufnahmedorn einer Halterung aufgesteckt sind und während des Transports um ihre vertikale Längsachse gedreht werden, und mit einer Einrichtung zum Abnehmen der erwärmten Vorformlinge von den Halterungen an einer der Heizstation nachgeordneten Abnahmestation und zum Überführen der Vorformlinge in wenigstens eine Blasformstation,
dadurch gekennzeichnet, daß der Abstand der Halterungen (16) in Transportrichtung einstellbar ist, um bei unterschiedlichen Durchmessern der zu erwärmenden Vorformlinge (3) deren Zwischenräume beim Transport zu minimieren.

5. Vorrichtung nach Anspruch 4,
dadurch gekennzeichnet, daß jeweils auf zwei benachbarten Kettengliedern (17) der Transportkette (15) eine Halterung (16) lösbar befestigt ist.

6. Vorrichtung nach Anspruch 4,
dadurch gekennzeichnet, daß jede Halterung (16) auf zwei benachbarten Kettengliedern (17) lösbar befestigt ist und daß zwischen den benachbarten Halterungen (16) jeweils ein Kettenglied (17) frei bleibt, an dem keine Halterung (16) befestigt ist.

7. Vorrichtung nach Anspruch 4,
dadurch gekennzeichnet, daß jede Halterung (16) auf zwei benachbarten Kettengliedern (17) lösbar befestigt ist und daß zwischen den benachbarten Halterungen (16) jeweils zwei Kettenglieder (17) freibleiben, an denen keine Halterung (16) befestigt ist.

8. Vorrichtung nach einem der Ansprüche 4 bis 7,
dadurch gekennzeichnet, daß die Halterungen (16) mittig von einem Hubzapfen (18) durchgriffen sind, an dem ein Aufnahmedorn (21, 24) vorzugsweise mittels eines Schnappverschlusses (27) austauschbar befestigt ist, und daß in der Oberseite der Halterung (16) eine ringförmige Aussparung (20) zur austauschbaren Befestigung einer Reflektorhülse (23, 26), vorzugsweise mittels eines Schnappverschlusses (28), ausgebildet ist, die beim Transport des Vorformlings (3) durch die Heizstation den auf den Aufnahmedorn (21, 24) aufgesteckten Halsbereich (22, 25) des Vorformlings (3) mit geringem Abstand umschließt.

9. Vorrichtung nach einem der Ansprüche 4 bis 8,
dadurch gekennzeichnet, daß zwei nebeneinander angeordnete Transportketten (15) vorgesehen sind und daß zu beiden Seiten der Abnahmestation eine Blasformstation (30) angeordnet ist, denen abwechselnd von einer Zangeneinrichtung (29) Vorformlinge (3) zugeführt werden.

10. Vorrichtung zum Blasformen vorgefertigter Vorformlinge aus Kunststoff, mit einer Infrarotstrahler aufweisenden Heizstation zum Erwärmen der Vorformlinge auf Blastemperatur, einer Transporteinrichtung für die Vorformlinge mit Aufnahmedornen zum Aufstecken des Halsbereichs jeweils eines Vorformlings vor dem Transport durch die Heizstation und einer Einrichtung zum Drehen der Vorformlinge um ihre vertikale Längsrichtung während des Transports durch die Heizstation, wobei die Vorformlinge mit unten positioniertem Halsbereich gehalten sind, und mit einer Einrichtung zum Abnehmen der erwärmten Vorformlinge von den Aufnahmedornen an einer Abnahmestation und zum Überführen der Vorformlinge in eine Blasformstation,
dadurch gekennzeichnet, daß jeder Aufnahmedorn (31) während des Durchlauf durch die Heizstation von einer radial beabstandeten Schutzhülse (33) umgeben ist, die den gesamten Halsbereich (32) des aufgesteckten Vorformlings (3) umschließt und gegen Wärmeinwirkung abschirmt.

11. Vorrichtung nach Anspruch 10,
dadurch gekennzeichnet, daß der Innendurchmesser der Schutzhülse (33) den maximalen Außendurchmesser des Halsbereichs (32) des Vorformlings (3) nur geringfügig übersteigt.

12. Vorrichtung nach Anspruch 10 oder 11,
dadurch gekennzeichnet, daß die Schutzhülse (33) fest an der Transporteinrichtung (15) angebracht ist, während der Aufnahmedorn (31) gegenüber der Schutzhülse (33) bewegbar gehalten ist, wobei der Aufnahmedorn (31) mit einem Hubzapfen (35) verbunden ist, der an der Abnahmestation von einer Hubeinrichtung derart anhebbar ist, daß sich der gesamte Halsbereich (32) des aufgesteckten Vorformlings (3) oberhalb der Oberkante (37) der Schutzhülse (33) befindet.

13. Vorrichtung nach einem der Ansprüche 10 bis 12,
dadurch gekennzeichnet, daß die Einrichtung zum Abnehmen und Überführen der Vorformlinge (3) mindestens eine Zange aufweist, die zwischen der Abnahmestation und der Blasformstation (30) in einer Ebene bewegbar ist, die auf der Höhe der Halsbereiche (32) der Vorformlinge (3) in deren angehobenen Zustand liegt, und daß die Hubeinrichtung für den Aufnahmedorn (31) und die Zange so gesteuert sind, daß nach dem Schließen der Zange um den Halsbereich (32) des Vorformlings (3) der Aufnahmedorn (31) aus dem Halsbereich zurückgezogen wird, so daß der Vorformling (3) in die Blasformstation (30) bewegbar ist.

## Claims

1. Method of heating cold plastics premouldings (3) taken from a stock and produced by the injection moulding process and which undergo heating and cooling along a track (8) and are delivered to a blowing arrangement for blowing the premouldings up into hollow bodies after passing through the track, characterised in that as the premouldings pass through the track (8) they are first heated to a temperature (Tmax1/Tmin1) below the blowing temperature (TBL), are thereafter cooled and, following on the cooling, are heated again to a temperature (Tmax3/Tmin3) lying slightly above the blowing temperature, after which, for equalization between the outer wall and inner wall temperature to the blowing temperature, they are left to themselves on the track (8), or are slightly cooled,before they are transferred to the blowing mould.

2. Method according to claim 1, characterised in that the premouldings pass through the first heating, the cooling following thereon and the second heating in equal periods of time.

3. Method according to claim 1 or 2, employing a feed system (4) sorting the cold, injection moulded premouldings and placing them in readiness and one or more tracks (8) with conveyor chains (6) lying parallel side by side, on which holding pegs (5) move the premouldings (3) placed on them by the feed system, with rotation about their axis, towards a blowing unit, characterised in that along the track (8), following on the feed system (4), a first heating section, a cooling section, a second heating section and an equalizing section are arranged one behind the other.

4. Apparatus for blow moulding prefabricated plastics premouldings, with a conveying arrangement which moves the premouldings through a heating station having infrared radiators, the premouldings being mounted in each case on a receiving peg of a holder with their neck region positioned at the bottom and being rotated about their vertical longitudinal axis during conveyance, and with an arrangement for removing the heated premouldings from the holders at a removal station arranged after the heating station and for transferring the premouldings to at least one blow moulding station, characterised in that the distance between the holders (16) in the direction of conveyance is adjustable in order to minimize during conveyance the gaps between the premouldings (3) to be heated where the diameters thereof are different.

5. Apparatus according to claim 4, characterised in that a holder (16) is fixed detachably in each case on two adjacent links (17) of the conveyor chain (15).

6. Apparatus according to claim 4, characterised in that each holder (16) is fixed detachably on two adjacent chain links (17) and one chain link (17) to which no holder (16) is fixed is left free between the adjacent holders (16)in each case.

7. Apparatus according to claim 4, characterised in that each holder (16) is fixed detachably on two adjacent chain links (17) and two chain links (17) to which no holder (16) is fixed are left free between the adjacent holders (16) in each case.

8. Apparatus according to any one of claims 4 to 7, characterised in that a lifting pin (18) to which a receiving peg (21, 24) is preferably attached exchangeably by means of a snap fastener (27) extends centrally through the holders (16) and an annular recess (20) for exchangeable fixing of a reflector sleeve (23, 26), preferably by means of a snap fastener (28), is formed in the top of the holder (16), the reflector sleeve surrounding the neck region (22, 25) of the premoulding (3) mounted on the receiving peg (21, 24) at a small distance during conveyance of the premoulding (3) through the heating station.

9. Apparatus according to any one of claims 4 to 8, characterised in that two conveyor chains (15) arranged side by side are provided and on both sides of the removal station there is arranged a blow moulding station (30) to which premouldings (3) are delivered alternately by a gripping device (29).

10. Apparatus for blow moulding prefabricated plastics premouldings, with a heating station having infrared radiators for heating the premouldings to blowing temperature, a conveying arrangement for the premouldings with receiving pegs for mounting the neck region of a premoulding in each case before conveyance through the heating station, and a device for rotating the premouldings about their vertical longitudinal axis during conveyance through the heating station, the premouldings being held -with their neck region positioned at the bottom, and with an arrangement for removing the heated premouldings from the receiving pegs at a removal station and for transferring the premouldings to a blow moulding station, characterised in that during passage through the heating station each receiving peg (31) is surrounded by a radially spaced protective sleeve (33) which encloses the entire neck region (32) of the mounted premoulding (3) and screens it against the action of heat.

11. Apparatus according to claim 10, characterised in that the internal diameter of the protective sleeve (33) only slightly exceeds the maximum external diameter of the neck region (32) of the premoulding (3).

12. Apparatus according to claim 10 or 11, characterised in that the protective sleeve (33) is fixedly mounted on the conveying arrangement (15), while the receiving peg (31) is held movably with respect to the protective sleeve (33), the receiving peg (31) being connected to a lifting pin (35) which can be so raised at the removal station by a lifting device that the entire neck region (32) of the mounted premoulding (3) is located above the top edge (37) of the protective sleeve (33).

13. Apparatus according to any one of claims 10 to 12, characterised in that the arrangement for removing and transferring the premouldings (3) has at least one gripper movable between the removal station and the blow moulding station (30) in a plane located level with the neck regions (32) of the premouldings (3) in their lifted state, and the lifting device for the receiving peg (31) and the gripper are so controlled that, after the closing of the gripper about the neck region (32) of the premoulding (3), the receiving peg (31) is retracted out of the neck region, so that the premoulding (3) can be moved into the blow moulding station (30).

## Revendications

1. Procédé destiné à chauffer des ébauches (3) en matière plastique, froides, réalisées par injection, prélevées d'une réserve, qui subissent sur une voie (8), un échauffement et un refroidissement et qui après traversée de la voie sont envoyées vers un dispositif de soufflage en vue du soufflage des ébauches en corps creux, caractérisé en ce que les ébauches traversant la voie (8) sont d'abord portées à une température (Tmax1/Tmin1) inférieure à la température de soufflage (TBL), puis refroidies et après refroidissement chauffées à nouveau à une température (Tmax3/Tmin3) qui est légèrement supérieure à la température de soufflage, après quoi, pour équilibrer la température entre la paroi extérieure et la paroi intérieure, elles sont laissées sur la voie (8) elle-même à la température de soufflage ou légèrement refroidies, avant d'être transférées dans le moule de soufflage.

2. Procédé selon la revendication 1, caractérisé en ce que les ébauches traversent le premier échauffement, le refroidissement qui s'ensuit et le second échauffement dans des temps égaux.

3. Procédé selon les revendications 1 ou 2, avec un dispositif d'alimentation (4) triant et plaçant correctement les ébauches froides moulées par injection ainsi qu'avec une ou plusieurs voies (8) juxtaposées, parallèles, avec des chaînes de transport (6) sur les broches de maintien (5) desquelles les ébauches (3), enfilées sur celles-ci par le dispositif d'alimentation, se déplacent avec rotation autour de leur axe en direction de l'unité de soufflage, caractérisé en ce que se succèdent sur la voie (8), à la suite du dispositif d'alimentation (4), un premier parcours d'échauffement, un parcours de refroidissement, un second parcours d'échauffement et un parcours d'équilibrage.

4. Dispositif pour le formage par soufflage d'ébauches préfabriquées en matière plastique, comportant un dispositif de transport qui déplace les ébauches à travers un poste de chauffage comportant des émetteurs d'infrarouge, les ébauches étant emboîtées chacune avec leur zone de col positionnée en bas, sur une broche de logement d'un dispositif de support et étant tournées pendant le transport autour de leur axe longitudinal vertical, et comportant un dispositif destiné à enlever les ébauches chauffées des dispositifs de transport dans un poste de prélèvement, monté en aval du poste de chauffage et destiné à transférer les ébauches dans au moins un poste de moulage par soufflage, caractérisé en ce que l'écartement des dispositifs de support (16) est réglable dans la direction de transport, afin de minimiser lors du transport les espaces intermédiaires entre les ébauches (3) à chauffer, lorsque celles-ci ont des diamètres différents.

5. Dispositif selon la revendication 4, caractérisé en ce qu'un dispositif de support (16) est fixé de manière amovible sur deux maillons (17) voisins de la chaîne de transport (15).

6. Dispositif selon la revendication 4, caractérisé en ce que chaque dispositif de support (16) est fixé de manière amovible sur deux maillons (17) voisins de la chaîne et en ce qu'entre les dispositifs de support (16) voisins il reste un maillon de chaîne (17) sur lequel n'est fixé aucun dispositif de support (16).

7. Dispositif selon la revendication 4, caractérisé en ce que chaque dispositif de support (16) est fixé de manière amovible sur deux maillons de chaîne (17) voisins et en ce qu'entre les dispositifs de support (16) voisins restent libres deux maillons de chaîne (17) sur lesquels aucun dispositif de support (16) n'est fixé.

8. Dispositif selon l'une des revendications 4 à 7, caractérisé en ce que les dispositifs de support (16) sont traversés au centre par une tige de levage (18) à laquelle est fixée, de manière échangeable, une broche de logement (21, 24), de préférence au moyen d'une fermeture à déclic (27) et en ce que dans la face supérieure du dispositif de support (16) il est formé une découpe (20) annulaire en vue de la fixation interchangeable d'une douille de réflecteur (23, 26), de préférence au moyen d'une fermeture à déclic (28), qui lors du transport de l'ébauche (3) à travers le poste de chauffage entoure, avec un faible écartement, la zone du col (22, 25) de l'ébauche (3), emboîtée sur la broche de logement (21, 24).

9. Dispositif selon l'une des revendications 4 à 8, caractérisé en ce qu'il est prévu deux chaînes de transport (15) juxtaposées et en ce que des deux côtés du poste de prélèvement il est prévu un poste de moulage par soufflage (30) auquel sont envoyées en alternance des ébauches (3), par un dispositif à pinces (29).

10. Dispositif de moulage par soufflage d'ébauches préfabriquées en matière plastique, comportant un poste de chauffage présentant des émetteurs d'infrarouge afin de chauffer des ébauches à la température de soufflage, un dispositif de transport des ébauches avec broches de logement pour emboîter la zone du col d'une ébauche avant le transport à travers le poste de chauffage ainsi qu'un dispositif destiné à faire tourner les ébauches autour de leur direction longitudinale verticale pendant le transport à travers le poste de chauffage, les ébauches étant maintenues avec leur zone de col positionnée vers le bas, et comportant un dispositif de prélèvement des ébauches chauffées des broches de logement d'un poste de prélèvement et pour transférer les ébauches dans un poste de moulage par soufflage, caractérisé en ce que chaque broche de logement (31) est entourée pendant la traversée du poste de chauffage, par une gaine de protection (33), écartée radialement, qui entoure toute la zone de col (32) de l'ébauche (3) emboîtée et la protège contre l'effet de la chaleur.

11. Dispositif selon la revendication 10, caractérisé en ce que le diamètre intérieur de la gaine de protection (33) n'est que légèrement supérieur au diamètre extérieur maximal de la zone de col (32) de l'ébauche (3).

12. Dispositif selon les revendications 10 ou 11, caractérisé en ce que la gaine de protection (33) est placée de manière fixe sur le dispositif de transport (15), tandis que la broche de logement (31) est maintenue déplaçable par rapport à la gaine de protection (33), la broche de logement (31) étant reliée à une tige de levage (35) qui peut être relevée au poste de prélèvement, par un dispositif de levage, de telle sorte que toute la zone de col (32) de l'ébauche (3) emboîtée se trouve au-dessus du bord supérieur (37) de la gaine de protection (33).

13. Dispositif selon l'une des revendications 10 à 12, caractérisé en ce que le dispositif de prélèvement et de transfert des ébauches (3) comporte au moins une pince, qui est déplaçable entre le poste de prélèvement et le poste de moulage par soufflage (30), dans un plan qui se situe à hauteur des zones de col (32) des ébauches (3), dans leur position relevée et en ce que le dispositif de levage pour la broche de logement (31) et la pince est commandé de manière qu'après fermeture de la pince autour de la zone de col (32) de l'ébauche (3), la broche de logement (31) est retirée de la zone de col, ce qui fait que l'ébauche (3) peut se déplacer dans le poste de moulage par soufflage (30).
